# EUROPEAN PATENT SPECIFICATION

(11) **EP 3 176 725 B1**
(45) Date of publication and mention of the grant of the patent: **10.04.2019**
(21) Application number: 15465562.5
(22) Date of filing: 03.12.2015
(51) Int. Cl.: G06K 9/00

(54) **METHOD AND DEVICE FOR DETECTING A BRAKING APPLICATION OF A VEHICLE**
VERFAHREN UND VORRICHTUNG ZUR ERKENNUNG EINER BREMSANWENDUNG EINES FAHRZEUGS
PROCÉDÉ ET DISPOSITIF POUR DÉTECTER UNE OPÉRATION DE FREINAGE D'UN VÉHICULE

(43) Date of publication of application: 07.06.2017
(73) Proprietor: Continental Automotive GmbH, 30165 Hannover (DE)
(72) Inventor: Botusescu, Adrian, 300584 Timisoara (RO); Jivet, Ioan, 300696 Timisoara (RO); Seiculescu, Ciprian, 300584 Timisoara (RO); Vladaia, Daniel, 300224 Timisoara (RO); Blaj, Corina, 307220 Giroc (RO)
(74) Representative: Reuter, Andreas

(56) References cited:
- US-A1- 2008 165 028
- US-A1- 2012 176 499
- US-A1- 2015 123 781
- MAURICIO CASARES ET AL: "A Robust Algorithm for the Detection of Vehicle Turn Signals and Brake Lights", ADVANCED VIDEO AND SIGNAL-BASED SURVEILLANCE (AVSS), 2012 IEEE NINTH INTERNATIONAL CONFERENCE ON, IEEE, 18 September 2012 (2012-09-18), pages 386-391, XP032248255, DOI: 10.1109/AVSS.2012.2 ISBN: 978-1-4673-2499-1
- WEI LIU ET AL: "Vision-Based Method for Forward Vehicle Brake Lights Recognition", INTERNATIONAL JOURNAL OF SIGNAL PROCESSING, IMAGE PROCESSING AND PATTERN RECOGNITION, vol. 8, no. 6, 30 June 2015 (2015-06-30), pages 167-180, XP055270150, ISSN: 2005-4254, DOI: 10.14257/ijsip.2015.8.6.18

## Description

### Field of the invention

The invention generally relates to driver assistance systems. In particular, the invention relates to a method for detecting a braking application of a vehicle and a device for detecting a braking application of a vehicle.

### Background of the invention

In traffic situations it is important to observe other cars surrounding the own car. Therefore, different driver assistance systems have been developed. In particular, driver assistance systems support the driver in evaluating or estimating dangerous situations by generating warning signals or actively influencing the driving situation of the own car. In this manner, it is possible that modern driver assistance systems improve the safety of car drivers and car passengers. Examples for driver assistance systems are adaptive cruise control, automatic parking, automatic light control, traffic sign recognition, forward collision warning, driver monitoring system, etc. It is of particular importance that cars in the vicinity of the own car or cars surrounding the own car, especially the car driving ahead, can be observed properly. Due to short distances to the car driving ahead, the reaction time often is too short to initiate an appropriate driving condition, e. g. a braking application. Therefore, it is required to provide reliable information of surrounding cars, for example cars driving in front of the own car or besides the own car.

An algorithm for the detection of vehicle turn lights and brake lights is described in MAURICIO CASARES ET AL: "A Robust Algorithm for the Detection of Vehicle Turn Signals and Brake Lights", ADVANCED VIDEO AND SIGNAL·BASED SURVEILLANCE (AVSS), 2012 IEEE NINTH INTERNATIONAL CONFERENCE ON, IEEE, 18 September 2012 (2012-09-18). The document describes on pages 386 to 391 an extraction of candidate regions that could be rear lights of the front vehicle by detecting areas in the image composed of red and white colors.

A vision-based method for forward vehicle brake lights recognition is described in WEI LIU ET Al: "Vision-Based Method for Forward Vehicle Brake Lights Recognition", INTERNATIONAL JOURNAL OF SIGNAL PROCESSING, IMAGE PROCESSING AND PATTERN RECOGNITION, vol. 8, no. 6, 30 June 2015 (2015-06-30). On pages 167 to 180 it is described that an original image is resized and a region of interest is set for the resized image. Scaling sub-widows are used to detect the target vehicle from the region of interest of the resized image.

US 2012/176499 A1 describes a method and apparatus for detecting a rear vehicle light. An image region can be defined which belongs to the vehicle contained in the image. The image is divided into a left part region, a middle part region and a right part region. A segmentation of the left part region, the middle part region and the right part region into image segments is also described.

### Summary of the invention

It is an object of the present invention to improve the safety in road traffic.

This object is achieved by the subject-matter of the independent claims. Further exemplary embodiments are evident from the dependent claims and the following description.

According to a first aspect of the invention, a method for detecting a braking application of a vehicle is provided. In a step of the method, a first image of a traffic situation in an environment is provided, for example by a camera of an ego car, wherein the first image comprises information about the vehicle in the environment. The information may comprise data about a position, a velocity or a type of the vehicle. The vehicle may for instance be a car, a truck or a motor cycle. In another step of the method, a first image part and a second image part are defined within the first image. In particular, the first image part and the second image part each define a part of the image plane of the first image. The first image part depicts a first illumination unit of the vehicle and the second image part depicts a second illumination unit of the vehicle. For example, the illumination units are brake lights or tail lights of the vehicle. Therefore, an allocation of the first image part to the first illumination unit and an allocation of the second image part to the second illumination unit may be based on an object list comprising a group of objects in the environment. In another step of the method, a change of a light intensity of the first and second illumination unit is determined based on the defined image parts. In another step of the method, a braking application is identified based on the determined change of the light intensity and in yet another step the braking application of the vehicle is verified using symmetry information of the first image part and the second image part. In order to determine a change in light intensity of the first and second illumination unit and thus to verify the braking application using the symmetry information, it may be possible to provide a second image in addition to the first image such that these images or sections or parts of these images can be compared with respect to verifying the braking application. Therefore, the first and second image may each comprise image parts depicting the illumination units at different times for identifying the braking application based on the variation of the light intensity. This aspect will be further described in the following.

In this manner, it is possible to verify or validate the correctness of a recognized braking application of the vehicle. Such a vehicle may for instance be a vehicle driving in front of the own vehicle or on another lane than the own vehicle. The symmetry information which may be based on a comparison between subzones in the first image part and the second image part may deliver information about the correctness of the braking application. If for instance the car driving in front of the own car changes the driving situation, e.g. conducts a braking application, then the tail lights of the car driving in front will change their light intensity which can be recognized by means of the method. After recognition of a change of the light intensity of the brake lights, it is verified whether the determined change of the light intensity is actually due to the braking application.

Thus, it is possible to verify whether a real braking application of the car driving in front has been conducted by detecting the braking lights or tail lights of the car driving in front and by determining the change of the light intensity of the braking lights of the car driving in front of the own car. Usually, cars have two braking or tail lights. Therefore, symmetry information between the left and the right braking light of the car driving in front may be considered. The first image part covers, for instance, the left braking light and the second image part covers, for instance, the right braking light of the car. These image parts can further be divided into subzones such that an average light intensity in each of the subzones is determined. Based on the determined average light intensities in the subzones, a comparison between subzones of the first image part and subzones of the right image part is conducted. In other words, each subzone in the first image part is associated with another subzone in the second image part such that the associated subzones are compared and if, for instance, the same average light intensity in the compared subzones is detected, an information for the correctness of the detection of the braking application can be provided.

In this manner, the braking application of the vehicle driving in front of the own vehicle is verified or validated. The validation may thus be a detection of the light intensity variation over at least two images wherein each of the images has a first image part and a second image part. The validation of the light intensity variation is therefore detected by looking for a symmetry in the first and the second image parts. The first and the second image parts may also be defined as left and right search zones or image parts.

According to an embodiment of the invention, a first section is defined within the first image wherein the first section covers the vehicle in the first image. The first image part and the second image part are located within the first section in the image plane.

For example, the first section may be a part of the first image which is greater than the first image part and the second image part. The first section, the first image part and the second image part are, for instance, parts of the image plane of the first image. Therefore, it is possible to define the first section such that the vehicle is depicted within the first section in the image plane of the first image. The first image part may cover a left tail light of the vehicle and the second image part may cover a right tail light of the vehicle. In other words, the first and second image parts are smaller than the first section and the first section is smaller than the first image. In this manner, a subdivision of the first image can be generated wherein the different parts of the first image are allocated to different parts or components of the traffic situation in the environment. For example, the first section is allocated to an object like the vehicle and the first image part is allocated to a component of the vehicle like, for instance, the tail light. Similarly, the second image part is allocated to another component of the vehicle like, for instance, the other tail light of the vehicle. However, this method also applies if only one tail light of the vehicle driving in front of the own vehicle is detected, e.g. the tail light of a motorcycle. The allocation of the first image section to a specified or detected object may be based on an object list comprising a group of objects in the environment as will be described in the following.

According to the invention, a second image of the traffic situation in the environment is provided. The second image is provided after the first image is provided. In particular, several images may be provided in order to obtain an image sequence based on which the verification of the braking application of the vehicle is conducted using symmetry information of first image parts and second image parts of each of the provided images. Furthermore, the change of the light intensity of the first and second illumination unit is determined based on a comparison between the first image and the second image and in particular based on a comparison between the image parts of the first image and image parts of the second image.

Using at least two images provides the opportunity to detect the light intensity variation because the first image is provided at an earlier point in time than the second image. If, for example, in the first image the illumination units are switched off and in the second image the illumination units are switched on, a change of the light intensity may be detected. The change in the light intensity of the illumination units, e.g. the tail lights of the vehicle, indicates the braking application to be identified. A comparison between the first image and the second image therefore provides information about the change of the light intensity of the first illumination unit and the second illumination unit.

According to another embodiment of the invention, inaccuracies resulting from the comparison between the first image and the second image are compensated using a morphological filtering process.

Using the morphological filtering process, movement artefacts resulting from the image by image comparison are removed. Such a morphological filter may be for example a top head filter. The filter detects sudden peaks in the illumination of a sufficiently large area with respect to the morphological element or area of the image. These are exactly the brake light areas, e.g. the subzones of the first image part and the second image part which cover only the brake lights to be determined. The noise generated by the movement artefacts is removed. Therefore, the intensity variation of the brake lights can be determined without having to know an exact position for the light in the first image part or in the second image part. The first image part and the second image part may also be defined as search areas or search zones.

According to another embodiment of the invention, a second section is generated within the second image wherein the second section covers the vehicle in the second image. A first image part of the second image depicts the first illumination unit and a second image part of the second image depicts the second illumination unit. The first image part and the second image part are located within the second image and within the second image section in the image plane.

The subdivision of the second image is thus similar or the same as for the first image. In other words, the first image comprises a first image section wherein a first image part and a second image part is located within the first image section of the first image and the second image comprises a second image section wherein a first image part and a second image part are also located in the second image section. In this manner, it is possible that the vehicle to be observed or detected may be followed in the traffic situation during a certain time with respect to a position in the image. Therefore, it may be possible that the first section has another position within the first image than the second section within the second image. The same applies to the image parts within the first image and the second image. This is due to a change of the position of the vehicle within the first image and the second image over the traffic situation as well as a change of the position of the illumination units, e.g. the brake lights of the vehicle in the first image and in the second image.

According to another embodiment of the invention, an object list of a group of objects in the environment is generated based on the first image of the traffic situation in the environment. The object list comprises information about at least a position of the objects of the group of objects in the environment.

For example, objects may be vehicles in front of the own vehicle, which is also called ego vehicle, but also objects within the environment such as trees, crash barriers or lane markings. In particular, it is possible to distinguish between vehicles and other objects within the environment. The vehicles which can be detected are listed in one object list with their characteristics as position in front of the car, velocity and the category like, for instance, passenger car, truck, motorcycle, etc. The method may further comprise the step of using the object list and selecting from the object list the most relevant object with respect to the traffic situation, e.g. lane position and distance. Once the object is selected, the method defines the object boundaries as a rectangle in the image plane which defines the first section or the second section within the first image and the second image, respectively. The first image and the second image may also be defined as first frame and second frame.

According to another embodiment of the invention, the vehicle is identified out of the group of objects based on the information about the position of the objects of the group of objects in the environment.

However, the information from the object list may further comprise information about the velocity and the category of the object. If the vehicle is identified out of the group of objects, the first section of the first image is located within the first image such that the first section covers the vehicle in the image plane. The same applies to the second image.

According to the invention, the first image part and the second image part are divided into a plurality of subzones. An average light intensity in each of the subzones is calculated such that the braking application of the vehicle is verified based on a change of the average light intensity of each of the subzones. In particular, the symmetry information is determined on the basis of the average light intensity of associated subzones of the first and second image parts.

The subzones may also be rectangular subzones within the first image part and the second image part such that the components covered by the first image part and the second image part can be analyzed more precisely. According to the invention, some of the plurality of subzones within the first image part cover the first illumination unit and some of the plurality of subzones within the second image part cover the second illumination unit. After the division of the subzones the comparison between associated subzones can be conducted and a symmetry between the first image part and the second image part can be detected. Therefore, an average light intensity in each of the subzones is calculated. If an average light intensity of two associated subzones in the first image part and in the second image part is similar or the same, then this symmetry information may be used in order to verify the braking application of the vehicle. This ensures the correctness of the determined change of the light intensity of the illumination units and thus ensures that the change of the light intensity of the braking lights of the vehicle driving in front was detected and not other illumination units of that car or in the environment. In other words, the symmetry information from the first and second image parts is used in order to validate or verify the braking application.

To validate the detection of a large intensity variation as corresponding to actual brake light events, e.g. turn off or turn on, the symmetry between the subzones is considered. Only a symmetric change in the light intensity will generate a valid detection of the change in status of the brake lights. The symmetry may be considered between subzones with high light intensity changes as well as for subzones with low or no intensity variation. As supplementary validation, the light variation from a third image part may be used.

According to another embodiment of the invention, a third image part is defined within the first image wherein the third image part depicts a third illumination unit of the vehicle. A change of the light intensity of the third illumination unit is determined based on the defined third image part and the braking application of the vehicle is verified based on a comparison of the change of the light intensity of the first and second illumination units with the change of the light intensity of the third illumination unit of the vehicle.

In this manner, a further validation or verification can be obtained by considering another brake light of the vehicle.

Such a brake light may, for instance, be another brake light in the middle upper region of the rear window of the vehicle.

According to another embodiment of the invention, a change in the position of the first illumination unit and the second illumination unit is detected and the detected change of the position of the first and second illumination units is compared with a predicted movement of the vehicle.

Thus, a further validation is performed by tracking the status and position of the detected vehicle including its brake lights over multiple images or frames. This is due to a position change within the first and second image and every following image because the traffic situation changes over the time. The tracking of the light position, e.g. the position of the illumination units and the status (switched on or switched off) is correlated with the actual and predicted movement of the associated object. For example, several images are used in the leading state, others in trailing and opposite state and some in undefined state as will be described in the following.

In other words, a comparison between two frames may provide information about where the respective light is in the first and second image parts and that there was an event in which the lights were switched from on to off or from off to on. It is possible to gather information about only the area where such event is detected with the comparison.

Since the actual values of the light intensities for the lights being switched on or off may be unknown, the light intensity in the frames before the detection and after the detection is compared. If the intensity in the area or part of detection is higher before the detection than after the detection, a conclusion can be made that the lights have turned from on to off or from off to on, respectively.

In order to enhance reliability, more frames can be provided before and after the event. The frames to be compared do not need to be consecutive. As it may take more than one frame for a significant difference in light intensity change, there may be several frames between the compared frames that are neglected (undefined state). For example, if L is a frame before "Leading", T a frame after "Trailing", U a frame in the undefined state and C1 and C2 the frames to be compared, a typical sequence of frames that are used for tracking could look like: L L L L L C1 U U U U C2 T T T T T.

According to another embodiment of the invention, image data of the first image are adjusted such that distortions resulting from a perspective view of the vehicle are compensated for.

In particular, not only the car driving in front of the ego car may be considered using the steps of this method, but also vehicles driving on other lanes of the road. The detection of brake lights or side lane cars may be performed in such a manner that the transformation of the perspective distorted side lane car view is conducted into a frontal view similar to the case when the object is on the lane in front. It is further possible that both a vehicle in front of the own vehicle and another vehicle on another lane than the own vehicle, e.g. a side lane vehicle, may be considered simultaneously such that a braking application of two cars may be detected, wherein one is in front and one is on a side lane with respect to the ego car. The detection of the braking application is further verified by the steps of the inventive method.

According to another embodiment of the invention, a control signal for a driver assistance system is generated after identifying the braking application based on the determined change of the light intensity of the first and second illumination unit.

If the verification of the braking application is successful, the control signal for the driver assistance system may generate an action of the ego car such that the driver of the ego car following the vehicle may be supported by the driver assistance system, for example by a braking application of the ego car. In this manner, the security on the road may be further enhanced.

According to another embodiment of the invention, the first and second illumination units are tail lights of the vehicle.

However, for verification, other lights than the tail lights of the vehicle may be used.

According to another embodiment of the invention, a supervised learning procedure is provided based on a pattern recognition of the first and second illumination unit.

This means that identified and verified braking applications in different traffic situations are stored and may further be a basis for future recognition, identifying of verification processes. The supervised learning procedure may thus be a learning algorithm for pattern classification. In other words, a pattern is classified within the images detected, for example by a camera of the ego car. For example, the first, second and third image parts are defined for a passenger car object. Each of the image parts is divided in a finite number of rectangular elements, for example subzones or subareas. The number of rectangular elements is the same independent of the distance of the vehicle object or of the size of the rectangle defining the vehicle object, e.g. the image section. The size of the elements then varies with the size of the vehicle object but the mean intensity in each element remains invariant with regard to the distance and therefore to the size of the rectangle defining the vehicle object. The rectangle defining the vehicle object may be the first section or the second section within the first image and the second image, respectively. In this manner, it is possible to create patterns that are invariant to the depth of the object in focus. The rectangular elements may be the subzones or further subdivisions of the subzones.

The supervised learning procedure or algorithm is supplied with information about different cases with lights on and light off, i.e. braking applications in different traffic situations. This information may then be the basis for the learning procedure. For example, learned cases are stored in a data base. The learning process may require a distinct period of time until the information is sufficient and the learning procedure is complete. After this learning period, the algorithm is capable of detecting the brake lights based on what is learned.

In each rectangular element, the mean light intensity is calculated for each colour component. The pattern is constructed using the horizontal, vertical and diagonal intensity gradient between the adjacent elements as well as the actual intensity of each element for each colour component.

From the search zone which is also defined as image part, a subset of rectangular elements is used to define a pattern. The pattern zones are smaller than the search zone, e.g. the image part. But the brake lights will be covered by a pattern zone. Several patterns are then defined to cover the entire search zone, e.g. image part. Elements from both left and right search zone are combined in one pattern such that the symmetry is also considered. The learning algorithm may further recognize patterns with the lights on and lights off. For this pattern, a database is provided in which the already recognized patterns or symmetry information may be stored. Colour filtering may be also applied to increase the reliability of the pattern recognition.

According to another aspect of the invention, a device for detecting a braking application of a vehicle is provided. The device comprises a camera being configured for providing a first image of a traffic situation in an environment, the first image comprising information about the vehicle in the environment. The device further comprises a processing unit being configured for defining a first image part and a second image part within the first image. The first image part depicts a first illumination unit of the vehicle and the second image part depicts a second illumination unit of the vehicle. The processing unit is configured for determining a change of light intensity of the first and second illumination unit based on the defined image parts, wherein the processing unit is configured for identifying a braking application based on the determined change of the light intensity. The processing unit is configured for verifying the braking application of the vehicle using symmetry information of the first image part and the second image part.

However, there are three main aspects which are addressed by the present invention. A first aspect is the detection of the brake lights activation of the vehicle in front of the ego vehicle or ego car and of other cars on adjacent lanes relative to the ego lane. Another aspect is the elimination of moving artefacts which are due to the relative movement of the objects within the images over the time. The third aspect is the validation of the detection of the brake lights activation in order to ensure that a variation in light intensity of brake lights is detected and not of other components in the environment. In this manner, an early warning of the motion of cars in front or besides the ego car may be provided. This warning may be converted into information for a driver assistance system which may activate brakes of the ego car.

The device for detecting the braking application may comprise a camera with image processing capabilities. The camera may for instance be capable of detecting the lanes and vehicles in front of the ego vehicle. The vehicles detected are listed in one object list with their characteristics as position in front of the ego car, velocity and category, e.g. passenger car, truck, etc. For example, in a database, an object list is stored and the selection from this object list may be conducted such that the most relevant object with respect to the traffic situation, e.g. lane position and distance, may be determined. Once the object is selected, the camera or processing unit may define the object boundaries as a rectangle in the image plane. This rectangle in the image plane may be the first section of the first image or the second section of the second image. Inside the rectangle that represents the boundaries of the object, the processing unit may further define three search areas which are also called image parts around the potential position of the brake lights, e.g. the illumination units. Only these areas are then monitored for light intensity variations. Once there is a sufficient light intensity variation in all these three areas between the consecutive images or frames, the system will detect and validate the brake lights activation. With respect to other vehicle types, the only changes come from the size and position of the image parts within the boundary rectangle, e.g. image section, as well as the number of search regions, e.g. image parts. For example, trucks require two image parts and motorcycles require only one image part.

There may be four main steps in the detection and validation of the braking application. In a first step, the light intensity variation may be detected by comparing the evolution in time of the light intensity within the image parts between the first and second image and for example following images. Colour filtering may be used to enhance the differences.

In a second step, the movement artefacts resulting from the image by image comparison may be removed by using morphological filtering, for example top head filtering. Such a filter detects sudden peaks in the illumination of a sufficiently large area with respect to the morphological element or subzone. These are exactly the brake light areas to be determined while the noise generated by the movement artefacts is removed. Therefore, the intensity variation of the brake lights can be determined without having to know an exact position of the lights in the image part or in the image section.

In a third step, the light intensity variation may be validated by detecting symmetry in the left and right image parts, e.g. the first and second image parts. The left and right image parts may be split into several subzones and the average light intensity variation for these subzones may be computed. To validate the detection of large intensity variation as corresponding to actual brake light events, the symmetry between the subzones may be determined and considered. Only a symmetric change in the light intensity will generate a valid detection on the change in status of the brake lights. The symmetry can be considered between the subzones with high light intensity changes as well as for the subzones with low or no intensity variation. As a supplementary validation, the light variation from the third image part or search area may be used.

In a fourth step, a further validation may be performed by tracking the status and position of the detected brake lights over multiple images, e.g. frames. The tracking of the light position and status is correlated with the actual and predicted movement of the associated object, e.g. the vehicle. In particular, several images may be used in the leading state, others trailing and opposite state and some in undefined state.

### Brief description of the drawings

Fig. 1A shows a first image comprising information about a vehicle in an environment according to an embodiment of the invention.
Fig. 1B shows a second image comprising information about a vehicle in an environment according to an embodiment of the invention.
Fig. 2 shows a morphological filtering and a symmetry validation according to an embodiment of the invention.
Fig. 3 shows a subdivision of a first image part, a second image part and a third image part into several subzones according to an embodiment of the invention.
Fig. 4 shows a pattern recognition according to an embodiment of the invention.
Fig. 5 shows a traffic situation with three cars according to an embodiment of the invention.
Fig. 6 shows a flow diagram for a method for detecting a braking application of a vehicle according to an embodiment of the invention.
Fig. 7 shows an ego car with a driver assistance system according to embodiment of the invention.

### Detailed description of the drawings

The elements depicted are diagrammatically and not to scale. If the same reference numerals are used in different figures, they denote the same or corresponding elements.

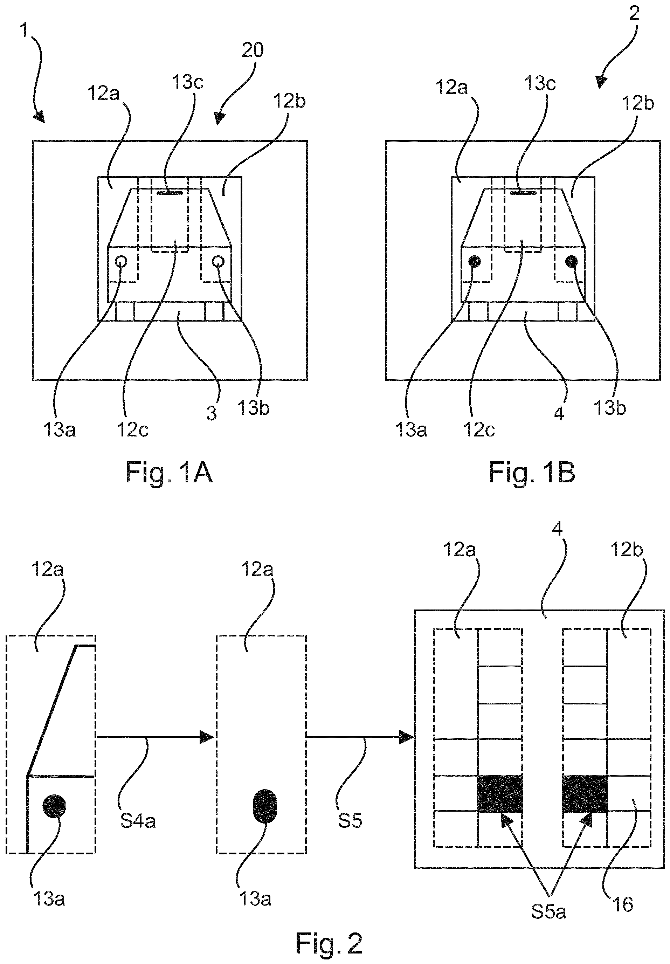

Fig. 1A shows a first image 1 defining an image plane. In the image plane of the first image 1, the first image section 3 is located. Within the first image section 3 and therefore also within the first image 1, a first image part 12a and a second image part 12b are defined. Furthermore, a third image part 12c is also defined and located within the first image section 3. The first image section 3 covers an object within the environment which is depicted in the first image 1. The first image 1 may be generated by a camera of an ego car and the object which is covered by the first section 3 of the first image 1 may be a car driving in front of the ego car. The car driving in front may comprise a first illumination unit 13a and a second illumination unit 13b as well as a third illumination unit 13c which are each covered by a separate image part 12a, 12b, 12c. For example, the first illumination unit 13a is covered in the image plane by the first image part 12a, the second illumination unit 13b is covered in the image plane by the second image part 12b and third illumination unit 13c is covered in the image plane by the third image part 12c. Fig. 1A shows a configuration in which the object, e.g. the car driving in front, comprises illumination units 13a, 13b which are switched off.

In contrast, Fig. 1B shows a second image 2 which is, for instance, generated after the first image 1 is generated and the second image 2 is for instance generated at a time in which the illumination units 13a, 13b of the car driving in front are switched on. These illumination units 13a, 13b may be tail lights or braking lights indicating a braking application of the car. By means of the first image 1 and the second image 2, it is possible to detect a variation in the light intensity of the illumination units 13a, 13b such that a braking application of the car is indicated. This braking application may be verified by using symmetry information of the first image part 12a and the second image part 12b of each of the images 1, 2 as will be described in Fig. 2.

In particular, Fig. 2 shows the first image part 12a at two different times and a morphological filtering process S4a is used to compensate inaccuracies, e. g. moving artefacts, resulting from a comparison between the first image 1 and the second image 2. For example, the light intensity of the illumination unit 13a is detected at two different times wherein at a first point in time, the braking light is switched off and at a second point in time, the braking light is switched on such that a variation in the light intensity can be detected. The variation of the light intensity is therefore detected based on the first image part 12a covering the left tail light of the car as shown in Fig. 2. The morphological filtering process S4a is used such that only light intensity variations of the left braking light or tail light of the car can be considered within the first image part 12a. Other parts of the first image part 12a will be suppressed and not used for determining the variation in light intensity between the different points in time. In other words, the morphological filtering process S4a removes the contours of the car, e.g. the thin areas, and leaves only the difference which results from the tail light changing state, e.g. the large area. Therefore, after application of the morphological filter, only an area that corresponds to the tail light or represents the illumination 13a is left.

Afterwards, a symmetry validation S5a of the first image part 12a and the second image part 12b of the second section 4 is conducted. Therefore, the first image part 12a as well as the second image part 12b are subdivided into several subzones 16 wherein at least one of these subzones 16 may be allocated to the tail lights of the car such that some of the plurality of subzones 16 cover the first illumination unit 13a and the second illumination unit 13b in the image plane. An average light intensity of each of the subzones 16 may be determined such that associated subzones 16 in the first image part 12a and the second image part 12b are compared afterwards in order to provide the symmetry information based on which the validation or verification of the braking application is conducted.

As can also be seen in Fig. 2, from two images 1, 2, wherein one image 2 is generated at time T and another image 1 is generated at time T-n, the image parts 12a are extracted from each image 1, 2. The images 1, 2 may be consecutively generated, for example if n = 1 or further apart if n > 1 to provide larger differences between the images 1, 2. The image parts 12a may be selected with respect to the position of the detected object in the respective image 1, 2. The size and position of the detected objects may be received from the ADAS- (Advanced Driver Assistance System) functions of the camera. The corresponding first image parts 12a in the two images 1, 2 are then compared. For example, a comparison can be performed by subtracting the first image parts 12a on a per pixel base. Areas of intensity variation (useful areas) and artefacts caused by the motion of the objects between the two images 1, 2 (not useful information) may remain after the comparison. To remove the movement artefacts, a morphological filter may be applied. For example, a top hat filtering may be conducted but other filters can be used as well. If top hat filtering is used, the larger areas with intensity variation will pass through the filter, while narrow areas will be removed. These large areas correspond to the brake lights when they turn on or off. The artefacts from movement appear as thin areas around the edges of the object and are removed by the filter. After the filtering, only the areas corresponding to the brake lights, e.g. the large areas, are left and therefore the inventive method does not require to know the exact position to the brake lights. The same procedure may be applied to the second image part 12b.

The image parts 12a, 12b are then divided into smaller areas, e. g subzones 16, and the average light intensity variation in these subzones 16 is compared between the first image part 12a and the second image part 12b. The assumption is that the left and right brake lights are symmetric and therefore the areas with large intensity variation should also be symmetric to consider an on/off brake light event. The intensity variation in the middle search area, e. g. the third image part 12c, may be considered separately and may be used as additional confirmation of a brake light on/off-event. The on/off-events and the position of the detected brake light events may then be tracked to improve the reliability of the method.

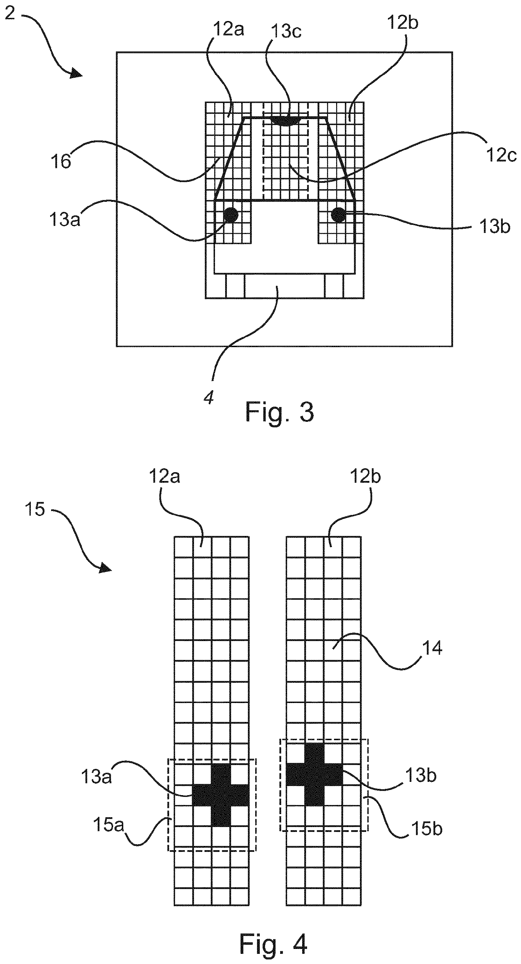

Fig. 3 shows a subdivision of the first image part 12a and the second image part 12b into several subzones 16. Each of the subzones 16 may further be subdivided into elements which may have a rectangular shape. However, the first illumination unit 13a is covered in the image plane by the first image part 12a and the second illumination unit 13b is covered by the second image part 12b. Furthermore, a third illumination unit 13c of the car driving in front may be covered by the third image part 12c as a further validation object for the braking application.

Fig. 4 shows a pattern recognition 15 of the first illumination unit 13a and the second illumination unit 13b. Therefore, the first image part 12a and the second image part 12b are divided into subzones 16 or elements 14 such that several elements 14 may cover the first illumination unit 13a and the second illumination unit 13b. A first segment 15a comprising several elements 14 is defined within the first image part 12a. Similarly, a second segment 15b comprises several elements 14 covering at least the second illumination unit 13b within the second image part 12b.

In Fig. 4, the search is done using only a single image 1, 2. The first and second image parts 12a, 12b are considered together to exploit symmetry while the middle search area, e.g. the third image part 12c, is used separately as additional confirmation of the state of the brake lights. The first and second image parts 12a, 12b are divided into smaller rectangular areas or elements 14, which are also called subzones 16, and the average light intensity for each element 14 is calculated. The size and number of the small rectangular elements 14 is chosen such as to provide a pattern that is invariant to the changes in size of the vehicle in front that corresponds to a change in distance to that vehicle. Using the properties of the elements 14 and differences between the elements 14, so-called pattern vectors are built. A subset of the elements 14 is used to generate a pattern vector as the brake lights are in a smaller region from the respective image part 12a, 12b. Pattern vectors are then generated as to cover all the subsets of element combinations in order to cover the entire image parts 12a, 12b. The pattern vectors are then classified using an algorithm for learning and pattern classification, e.g. a support vector machine or neural networks. If the vector is found and classified, the lights may be tracked over multiple images 1, 2 as to increase reliability of the detection method. Considering which subset of elements 14 is used to construct the pattern vector, the position of the brake lights in the image may also be estimated. To construct the pattern vectors, the intensity gradient over all directions from an element 14 for each colour component and the intensity of each element 14 for each colour component may be used. To improve the separation of the classes between patterns, colour filtering may be used in the image parts 12a, 12b before the construction of the elements 14.

In a similar manner, other car lights may be detected such that additional information can be provided for the advanced driver assistance system or to the driver. For example, a turn indicator light may also be detected to provide information for functions like object detection for predictive tracking.

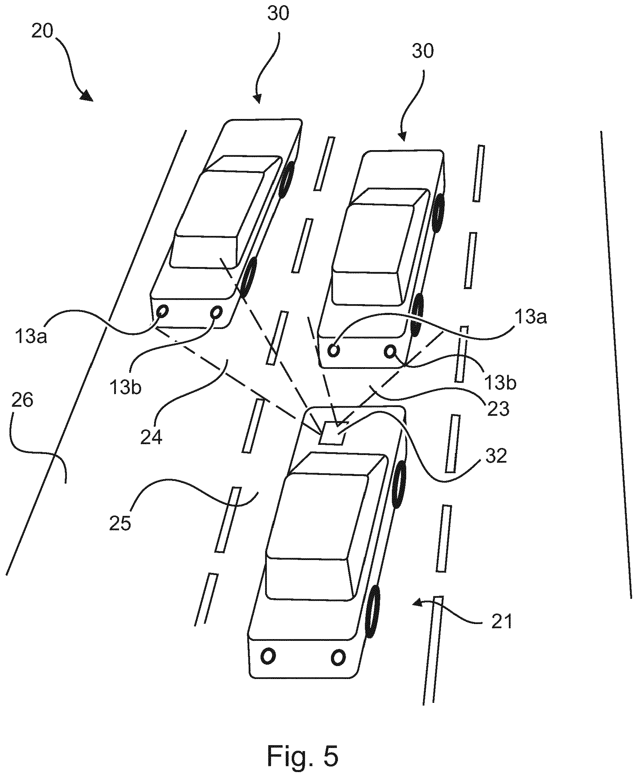

Fig. 5 shows a traffic situation 20 with three cars wherein an ego car 21 follows another car 30 and a third car 30 is located on a side lane 26 with respect to the ego car 21. The ego car 21 may comprise a processing unit and a camera 32 which is capable of detecting illumination units 13a, 13b, e.g. tail lights of the cars 30.

The camera 32 has a first view field 23 detecting the tail lights of the car 30 driving in front of the ego car 21 on the first lane 25. The camera 32 is also capable of detecting the tail lights of the car 30 on the side lane 26 by generating a second view field 24 which covers the tail lights of this car 30 driving on the side lane 26.

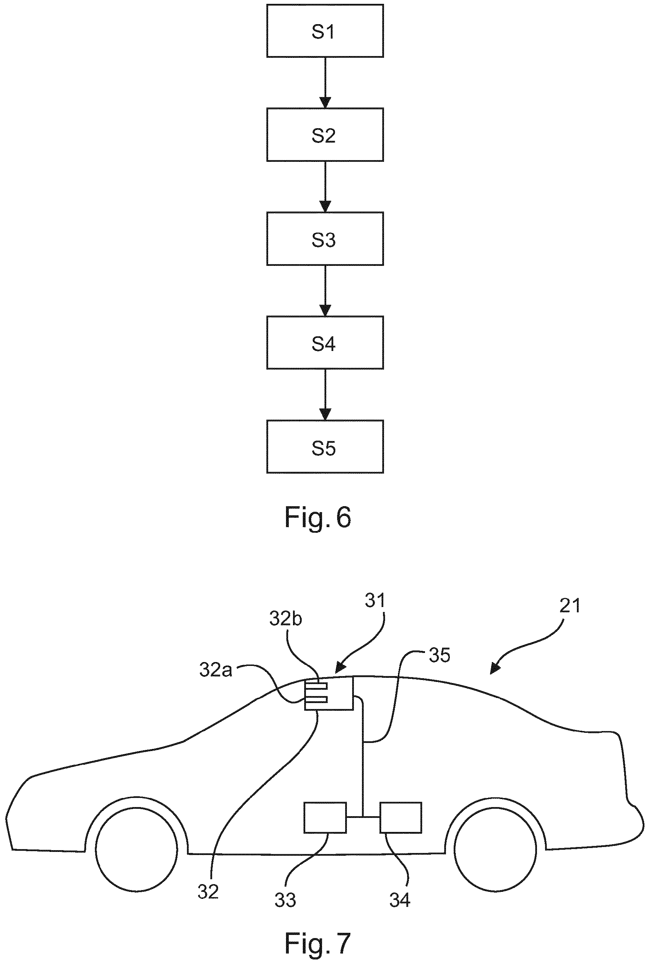

Fig. 6 shows a flow diagram of a method for detecting a braking application of a vehicle 30. The vehicle may for instance be a car 30. In a first step S1 of the method, a first image 1 of a traffic situation 20 in an environment is provided. The first image 1 comprises information about the vehicle 30 in the environment. In a second step S2 of the method, a first image part 12a and a second image part 12b are defined within the first image 1 wherein the first image part 12a depicts a first illumination unit 13a of the vehicle 30 and the second image part 12b depicts a second illumination unit 13b of the vehicle 30. In a third step S3 of the method, a change of a light intensity of the first illumination unit 13a and the second illumination unit 13b is determined based on the defined image parts 12a, 12b. In a fourth step S4 of the method, a braking application is identified based on the determined change of the light intensity. In a fifth step S5 of the method, the braking application of the vehicle 30 is verified using symmetry information of the first image part 12a and the second image part 12b.

Fig. 7 shows an ego car 21 with a driver assistance system 31 which is capable of executing the method as described above. In particular, the driver assistance system 31 comprises a camera 32 which for instance is a stereo camera 32 comprising a first camera 32a and a second camera 32b. The driver assistance system 31 further comprises a processing unit 33 as well as a control unit 34. The processing unit 33 may process information provided by the camera 32 and the control unit 34 may provide a control signal for example for a braking application of the ego car 21 based on the processed information from the processing unit 33. The camera 32 as well as the processing unit 33 and the control unit 34 may be connected via a connection line 35 or via wireless signal transmission.

While the invention has been illustrated and described in detail in the drawings and the foregoing description, such illustration and description are to be considered illustrative and exemplary and not restrictive, the invention is not limited to the disclosed embodiments. Other variations to the disclosed embodiments can be understood and effected by those skilled in the art and practising the claimed invention, from a study of the drawings, the disclosure, and the appended claims. In the claims, the term "comprising" does not exclude other elements, and the indefinite article "a" or "an" does not exclude a plurality. The mere fact that certain measures are recited in mutually different dependent claims does not indicate that a combination of these measures cannot be used to advantage. Any reference signs in the claims should not be construed as the limiting the scope of protection.

## Claims

1. Method for detecting a braking application of a vehicle (30), comprising the steps:
Providing a first image (1) of a traffic situation (20) in an environment, the first image (1) comprising information about the vehicle (30) in the environment (S1) ;
Detecting a first section (3) within the first image (1), the first section (3) covering the vehicle (30) in the first image (1);
Defining a first image part (12a) and a second image part (12b) within the first section (3), wherein the first image part (12a) covers a first illumination (13a) unit of the vehicle (30) and the second image part (12b) covers a second illumination (13b) unit of the vehicle (30, S2);
Providing a second image (2) of the traffic situation (20) in the environment, the second image (2) being provided after the first image (1) is provided,
Detecting a second section (4) within the second image (2), the second section (4) covering the vehicle (30) in the second image (2);
Defining a first image part (12a) and a second image part (12b) within the second section(4), wherein the first image part (12a) covers the first illumination (13a) unit of the vehicle (30) and the second image part (12b) covers the second illumination (13b) unit of the vehicle (30);
Dividing the first image parts (12a) and the second image parts (12b) into a plurality of subzones (16), wherein some of the plurality of subzones (16) within each first image part (12a) cover the first illumination unit (13a) and some of the plurality of subzones (16) within each second image part (12b) cover the second illumination unit (13b);
Determining a change of a light intensity of the first illumination unit (13a) and second illumination unit based on the defined image parts (12a, 12b, S3);
Determining the change of the light intensity of the first illumination unit (13a) and second illumination unit (13b) based on a comparison between the first image (1) and the second image (2).
Identifying a braking application based on the determined change of the light intensity (S4); and
Verifying the braking application of the vehicle (30) using symmetry information of the first image parts (12a) and the second image parts (12b, S5)
wherein an average light intensity in each of the subzones (16) is calculated such that the braking application of the vehicle (30) is verified based on a symmetric change of the average light intensity of each of the subzones (16, S5).

2. Method according to any one of the preceding claims, comprising:
Compensating inaccuracies resulting from the comparison between the first image (1) and the second image (2) using a morphological filtering process (S4a).

3. Method according to any one of the preceding claims, comprising:
Generating an object list of a group of objects in the environment based on the first image (1) of the traffic situation (20) in the environment, the object list comprising information about at least a position of the objects of the group of objects in the environment.

4. Method according to claim 5, comprising:
Identifying the vehicle (30) out of the group of objects based on the information about the position of the objects of the group of objects in the environment.

5. Method according to any one of the preceding claims, comprising:
Defining a third image part (12c) within the first image (1),
wherein the third image part (12c) covers a third illumination (13c) unit of the vehicle (30); Determining a change of the light intensity of the third illumination (13c) unit based on the defined third image part (12c); and
Verifying the braking application of the vehicle (30) based on a comparison of the change of the light intensity of the first illumination unit (13a) and second illumination units (13b) with the change of the light intensity of the third illumination (13c) unit of the vehicle (30).

6. Method according to any one of the preceding claims, comprising:
Detecting a change in the position of the first illumination unit (13a) and second illumination unit (13b); and
Comparing the detected change of the position of the first illumination unit (13a) and second illumination (13b) with a predicted movement of the vehicle (30).

7. Method according to any one of the preceding claims, comprising:
Adjusting image data of the first image (1) such that distortions resulting from a perspective view of the vehicle (30) are compensated for.

8. Method according to any one of the preceding claims, comprising:
Generating a control signal for a driver assistance system (31) after identifying the braking application based on the determined change of the light intensity of the first illumination unit (13a) and second illumination unit (13b).

9. Method according to any one of the preceding claims,
wherein the first illumination unit (13a) and second illumination units (13b) are tail lights of the vehicle.

10. Method according to any one of the preceding claims, comprising:
Providing a supervised learning procedure based on a pattern recognition (15) of the first illumination unit (13a) and second illumination unit (13b).

11. Device for detecting a braking application of a vehicle (30), comprising:
a camera (32) being configured for providing a first image (1) of a traffic situation (20) in an environment, the first image (1) comprising information about the vehicle (30) in the environment;
a processing unit (33) being configured
for detecting a first image section (3) within the first image (1), the first section (3) covering the vehicle (30) in the first image (1) and
for defining a first image part (12a) and a second image part (12b) within the first section (3),
wherein the first image part (12a) covers a first illumination unit (13a) of the vehicle (30) and the second image part (12b) covers a second illumination (13b) unit of the vehicle (30);
wherein the camera (32) is configured for providing a second image (2) of the traffic situation (20) in the environment, the second image (2) being provided after the first image (1) is provided;
wherein the processing unit (33) is configured for detecting a second image section (4) within the second image (2), the second section (4) covering the vehicle (30) in the second image (2) and for defining a first image part (12a) and a second image part (12b) within the second section (4);
wherein the first image part (12a) covers the first illumination (13a) unit of the vehicle (30) and the second image part (12b) covers the second illumination (13b) unit of the vehicle (30);
wherein the processing unit (33) is configured for dividing the first image parts (12a) and the second image parts (12b) into a plurality of subzones (16); wherein some of the plurality of subzones (16) within each first image part (12a) cover the first illumination unit (13a) and some of the plurality of subzones (16) within each second image part (12b) cover the second illumination unit (13b);
wherein the processing unit (33) is configured for determining a change of a light intensity of the first illumination unit (13a) and second illumination unit (13b) based on the defined image parts (12a, 12b);
wherein the processing unit (33) is configured for determining the change of the light intensity of the first illumination unit (13a) and second illumination unit (13b) based on a comparison between the first image (1) and the second image (2).
wherein the processing unit (33) is configured for identifying a braking application based on the determined change of the light intensity; and
wherein the processing unit (33) is configured for verifying the braking application of the vehicle (30) using symmetry information of the first image parts (12a) and the second image parts (12b);
wherein the processing unit (33) is configured for calculating an average light intensity in each of the subzones (16) such that the braking application of the vehicle (30) is verified based on a symmetrical change of the average light intensity of each of the subzones (16).

## Patentansprüche

1. Verfahren zum Detektieren einer Bremsbetätigung eines Fahrzeuges (30), das folgende Schritte umfasst:
Bereitstellen eines ersten Bildes (1) einer Verkehrssituation (20) in einer Umgebung, wobei das erste Bild (1) Informationen über das Fahrzeug (30) in der Umgebung umfasst (S1);
Detektieren eines ersten Abschnittes (3) innerhalb des ersten Bildes (1), wobei der erste Abschnitt (3) das Fahrzeug (30) in dem ersten Bild (1) erfasst;
Bestimmen eines ersten Bildteiles (12a) und eines zweiten Bildteiles (12b) innerhalb des ersten Abschnittes (3), wobei der erste Bildteil (12a) eine erste Beleuchtungseinheit (13a) des Fahrzeuges (30) erfasst und der zweite Bildteil (12b) eine zweite Beleuchtungseinheit (13b) des Fahrzeuges (30, S2) erfasst;
Bereitstellen eines zweiten Bildes (2) der Verkehrssituation (20) in der Umgebung, wobei das zweite Bild (2) nach Bereitstellung des ersten Bildes (1) bereitgestellt wird,
Detektieren eines zweiten Abschnittes (4) innerhalb des zweiten Bildes (2), wobei der zweite Abschnitt (4) das Fahrzeug (30) in dem zweiten Bild (2) erfasst;
Bestimmen eines ersten Bildteiles (12a) und eines zweiten Bildteiles (12b) innerhalb des zweiten Abschnittes (4), wobei der erste Bildteil (12a) die erste Beleuchtungseinheit (13a) des Fahrzeuges (30) erfasst und der zweite Bildteil (12b) die zweite Beleuchtungseinheit (13b) des Fahrzeuges (30) erfasst;
Unterteilen der ersten Bildteile (12a) und der zweiten Bildteile (12b) in eine Mehrzahl von Unterzonen (16), wobei einige der Mehrzahl von Unterzonen (16) innerhalb jedes ersten Bildteiles (12a) die erste Beleuchtungseinheit (13a) erfassen und einige der Mehrzahl von Unterzonen (16) innerhalb jedes zweiten Bildteiles (12b) die zweite Beleuchtungseinheit (13b) erfassen;
Bestimmen einer Änderung einer Lichtintensität der ersten Beleuchtungseinheit (13a) und zweiten Beleuchtungseinheit auf der Grundlage der bestimmten Bildteile (12a, 12b, S3);
Bestimmen der Änderung der Lichtintensität der ersten Beleuchtungseinheit (13a) und zweiten Beleuchtungseinheit (13b) auf der Grundlage eines Vergleiches zwischen dem ersten Bild (1) und dem zweiten Bild (2);
Identifizieren einer Bremsbetätigung auf der Grundlage der bestimmten Änderung der Lichtintensität (S4); und
Verifizieren der Bremsbetätigung des Fahrzeuges (30) unter Verwendung von Symmetrieinformationen der ersten Bildteile (12a) und der zweiten Bildteile (12b, S5),
wobei eine durchschnittliche Lichtintensität in jeder der Unterzonen (16) derart berechnet wird, dass die Bremsbetätigung des Fahrzeuges (30) auf der Grundlage einer symmetrischen Änderung der durchschnittlichen Lichtintensität jeder der Unterzonen (16, S5) verifiziert wird.

2. Verfahren nach einem der vorangehenden Ansprüche, umfassend:
Kompensieren von Ungenauigkeiten, die sich aus dem Vergleich zwischen dem ersten Bild (1) und dem zweiten Bild (2) ergeben, unter Verwendung eines morphologischen Filterprozesses (S4a).

3. Verfahren nach einem der vorangehenden Ansprüche, umfassend:
Erzeugen einer Objektliste einer Gruppe von Objekten in der Umgebung auf der Grundlage des ersten Bildes (1) der Verkehrssituation (20) in der Umgebung, wobei die Objektliste Informationen über zumindest eine Position der Objekte der Gruppe von Objekten in der Umgebung umfasst.

4. Verfahren nach Anspruch 5, umfassend:
Identifizieren des Fahrzeuges (30) aus der Gruppe von Objekten auf der Grundlage der Informationen über die Position der Objekte der Gruppe von Objekten in der Umgebung.

5. Verfahren nach einem der vorangehenden Ansprüche, umfassend:
Bestimmen eines dritten Bildteiles (12c) innerhalb des ersten Bildes (1),
wobei der dritte Bildteil (12c) eine dritte Beleuchtungseinheit (13c) des Fahrzeuges (30) erfasst;
Bestimmen einer Änderung der Lichtintensität der dritten Beleuchtungseinheit (13c) auf der Grundlage des bestimmten dritten Bildteiles (12c); und
Verifizieren der Bremsbetätigung des Fahrzeuges (30) auf der Grundlage eines Vergleiches der Änderung der Lichtintensität der ersten Beleuchtungseinheit (13a) und zweiten Beleuchtungseinheit (13b) mit der Änderung der Lichtintensität der dritten Beleuchtungseinheit (13c) des Fahrzeuges (30).

6. Verfahren nach einem der vorangehenden Ansprüche, umfassend:
Detektieren einer Änderung der Position der ersten Beleuchtungseinheit (13a) und zweiten Beleuchtungseinheit (13b); und
Vergleichen der detektierten Änderung der Position der ersten Beleuchtungseinheit (13a) und zweiten Beleuchtungseinheit (13b) mit einer vorhergesagten Bewegung des Fahrzeuges (30).

7. Verfahren nach einem der vorangehenden Ansprüche, umfassend:
Anpassen von Bilddaten des ersten Bildes (1) derart, dass Verzerrungen, die sich aus einer perspektivischen Ansicht des Fahrzeuges (30) ergeben, kompensiert werden.

8. Verfahren nach einem der vorangehenden Ansprüche, umfassend:
Erzeugen eines Steuersignals für ein Fahrerassistenzsystem (31) nach der Identifizierung der Bremsbetätigung auf der Grundlage der bestimmten Änderung der Lichtintensität der ersten Beleuchtungseinheit (13a) und zweiten Beleuchtungseinheit (13b).

9. Verfahren nach einem der vorangehenden Ansprüche,
wobei die erste Beleuchtungseinheit (13a) und zweite Beleuchtungseinheit (13b) Rücklichter des Fahrzeuges sind.

10. Verfahren nach einem der vorangehenden Ansprüche, umfassend:
Bereitstellen einer überwachten Lernprozedur auf der Grundlage einer Mustererkennung (15) der ersten Beleuchtungseinheit (13a) und zweiten Beleuchtungseinheit (13b) .

11. Vorrichtung zum Detektieren einer Bremsbetätigung eines Fahrzeuges (30), umfassend:
eine Kamera (32), ausgestaltet zum Bereitstellen eines ersten Bildes (1) einer Verkehrssituation (20) in einer Umgebung, wobei das erste Bild (1) Informationen über das Fahrzeug (30) in der Umgebung umfasst;
eine Verarbeitungseinheit (33), die ausgestaltet ist:
für das Detektieren eines ersten Bildabschnittes (3) innerhalb des ersten Bildes (1), wobei der erste Abschnitt (3) das Fahrzeug (30) in dem ersten Bild (1) erfasst, und
für das Bestimmen eines ersten Bildteiles (12a) und eines zweiten Bildteiles (12b) innerhalb des ersten Abschnittes (3),
wobei der erste Bildteil (12a) eine erste Beleuchtungseinheit (13a) des Fahrzeuges (30) erfasst und der zweite Bildteil (12b) eine zweite Beleuchtungseinheit (13b) des Fahrzeuges (30) erfasst;
wobei die Kamera (32) zum Bereitstellen eines zweiten Bildes (2) der Verkehrssituation (20) in der Umgebung ausgestaltet ist, wobei das zweite Bild (2) nach Bereitstellung des ersten Bildes (1) bereitgestellt wird;
wobei die Verarbeitungseinheit (33) zum Detektieren eines zweiten Bildabschnittes (4) innerhalb des zweiten Bildes (2) ausgestaltet ist, wobei der zweite Abschnitt (4) das Fahrzeug (30) in dem zweiten Bild (2) erfasst, und
für das Bestimmen eines ersten Bildteiles (12a) und eines zweiten Bildteiles (12b) innerhalb des zweiten Abschnittes (4);
wobei der erste Bildteil (12a) die erste Beleuchtungseinheit (13a) des Fahrzeuges (30) erfasst und der zweite Bildteil (12b) die zweite Beleuchtungseinheit (13b) des Fahrzeuges (30) erfasst;
wobei die Verarbeitungseinheit (33) zum Unterteilen der ersten Bildteile (12a) und der zweiten Bildteile (12b) in eine Mehrzahl von Unterzonen (16) ausgestaltet ist; wobei einige der Mehrzahl von Unterzonen (16) innerhalb jedes ersten Bildteiles (12a) die erste Beleuchtungseinheit (13a) erfassen und einige der Mehrzahl von Unterzonen (16) innerhalb jedes zweiten Bildteiles (12b) die zweite Beleuchtungseinheit (13b) erfassen;
wobei die Verarbeitungseinheit (33) zum Bestimmen einer Änderung einer Lichtintensität der ersten Beleuchtungseinheit (13a) und zweiten Beleuchtungseinheit (13b) auf der Grundlage der bestimmten Bildteile (12a, 12b) ausgestaltet ist;
wobei die Verarbeitungseinheit (33) zum Bestimmen der Änderung der Lichtintensität der ersten Beleuchtungseinheit (13a) und zweiten Beleuchtungseinheit (13b) auf der Grundlage eines Vergleiches zwischen dem ersten Bild (1) und dem zweiten Bild (2) ausgestaltet ist,
wobei die Verarbeitungseinheit (33) zum Identifizieren einer Bremsbetätigung auf der Grundlage der bestimmten Änderung der Lichtintensität ausgestaltet ist; und
wobei die Verarbeitungseinheit (33) zum Verifizieren der Bremsbetätigung des Fahrzeuges (30) unter Verwendung von Symmetrieinformationen der ersten Bildteile (12a) und der zweiten Bildteile (12b) ausgestaltet ist;
wobei die Verarbeitungseinheit (33) dazu ausgestaltet ist, eine durchschnittliche Lichtintensität in jeder der Unterzonen (16) derart zu berechnen, dass die Bremsbetätigung des Fahrzeuges (30) auf der Grundlage einer symmetrischen Änderung der durchschnittlichen Lichtintensität jeder der Unterzonen (16) verifiziert wird.

## Revendications

1. Procédé de détection d'une application de freinage d'un véhicule (30), comprenant les étapes suivantes :
délivrance d'une première image (1) d'une situation de trafic (20) dans un environnement, la première image (1) comprenant des informations relatives au véhicule (30) dans l'environnement (S1) ;
détection d'une première section (3) à l'intérieur de la première image (1), la première section (3) couvrant le véhicule (30) dans la première image (1) ;
définition d'une première partie d'image (12a) et d'une deuxième partie d'image (12b) à l'intérieur de la première section (3), la première partie d'image (12a) couvrant une première unité d'éclairage (13a) du véhicule (30) et la deuxième partie d'image (12b) couvrant une deuxième unité d'éclairage (13b) du véhicule (30, S2) ;
délivrance d'une deuxième image (2) de la situation de trafic (20) dans l'environnement, la deuxième image (2) étant délivrée consécutivement à la délivrance de la première image (1),
détection d'une deuxième section (4) à l'intérieur de la deuxième image (1), la deuxième section (4) couvrant le véhicule (30) dans la deuxième image (2) ;
définition d'une première partie d'image (12a) et d'une deuxième partie d'image (12b) à l'intérieur de la deuxième section (4), la première partie d'image (12a) couvrant la première unité d'éclairage (13a) du véhicule (30) et la deuxième partie d'image (12b) couvrant la deuxième unité d'éclairage (13b) du véhicule (30) ;
division des premières parties d'image (12a) et des deuxièmes parties d'image (12b) en une pluralité de sous-zones (16), quelques sous-zones de la pluralité (16) à l'intérieur de chaque première partie d'image (12a) couvrant la première unité d'éclairage (13a) et quelques sous-zones de la pluralité (16) à l'intérieur de chaque deuxième partie d'image (12b) couvrant la deuxième unité d'éclairage (13b) ;
détermination d'une variation d'intensité lumineuse de la première unité d'éclairage (13a) et de la deuxième unité d'éclairage sur la base des parties d'image (12a, 12b, S3) définies ;
détermination de la variation d'intensité lumineuse de la première unité d'éclairage (13a) et de la deuxième unité d'éclairage (13b) sur la base d'une comparaison entre la première image (1) et la deuxième image (2)
identification d'une application de freinage sur la base de la variation d'intensité lumineuse (S4) déterminée ; et
contrôle de l'application de freinage du véhicule (30) au moyen d'informations de symétrie des premières parties d'image (12a) et des deuxièmes parties d'image (12b, S5) ;
une intensité lumineuse moyenne dans chacune des sous-zones (16) étant calculée de manière à contrôler l'application de freinage du véhicule (30) sur la base d'une variation symétrique de l'intensité lumineuse moyenne de chacune des sous-zones (16, S5).

2. Procédé selon l'une des revendications précédentes, comprenant :
la compensation d'erreurs résultant de la comparaison entre la première image (1) et la deuxième image (2) au moyen d'un processus de filtrage morphologique (S4a).

3. Procédé selon l'une des revendications précédentes, comprenant :
la génération d'une liste d'objets d'un groupe d'objets dans l'environnement sur la base de la première image (1) de la situation de trafic (20) dans l'environnement, la liste d'objets comprenant des informations relatives à au moins une position des objets du groupe d'objets dans l'environnement.

4. Procédé selon la revendication 5, comprenant :
l'identification du véhicule (30) dans le groupe d'objets sur la base des informations relatives à la position des objets du groupe d'objets dans l'environnement.

5. Procédé selon l'une des revendications précédentes, comprenant :
la définition d'une troisième partie d'image (12c) à l'intérieur de la première image (1),
la troisième partie d'image (12c) couvrant une troisième unité d'éclairage (13c) du véhicule (30) ;
la détermination d'une variation d'intensité lumineuse de la troisième unité d'éclairage (13c) sur la base de la troisième partie d'image (12c) définie ; et
le contrôle de l'application de freinage du véhicule (30) sur la base d'une comparaison de la variation d'intensité lumineuse de la première unité d'éclairage (13a) et des deuxièmes unités d'éclairage (13b) avec la variation d'intensité lumineuse de la troisième unité d'éclairage (13c) du véhicule (30).

6. Procédé selon l'une des revendications précédentes, comprenant :
la détection d'une variation dans la position de la première unité d'éclairage (13a) et de la deuxième unité d'éclairage (13b) ; et
la comparaison de la variation détectée de la position de la première unité d'éclairage (13a) et de la deuxième unité d'éclairage (13b) avec un déplacement prédit du véhicule (30).

7. Procédé selon l'une des revendications précédentes, comprenant :
l'ajustement de données d'image de la première image (1) de manière à compenser des distorsions résultant d'une vue en perspective du véhicule (30).

8. Procédé selon l'une des revendications précédentes, comprenant :
la génération d'un signal de commande pour un système d'assistance au conducteur (31) après identification de l'application de freinage sur la base de la variation d'intensité lumineuse déterminée de la première unité d'éclairage (13a) et de la deuxième unité d'éclairage (13b) .

9. Procédé selon l'une des revendications précédentes,
où la première unité d'éclairage (13a) et les deuxièmes unités d'éclairage (13b) sont des feux arrière du véhicule.

10. Procédé selon l'une des revendications précédentes, comprenant :
la délivrance d'une procédure d'apprentissage supervisée sur la base d'une reconnaissance de forme (15) de la première unité d'éclairage (13a) et de la deuxième unité d'éclairage (13b).

11. Dispositif pour la détection d'une application de freinage d'un véhicule (30), comprenant :
une caméra (32) prévue pour délivrer une première image (1) d'une situation de trafic (20) dans un environnement, la première image (1) comprenant des informations relatives au véhicule (30) dans l'environnement ;
une unité de traitement (33) prévue
pour détecter une première section d'image (3) à l'intérieur de la première image (1), la première section (3) couvrant le véhicule (30) dans la première image (1) et
pour définir une première partie d'image (12a) et une deuxième partie d'image (12b) à l'intérieur de la première section (3),
la première partie d'image (12a) couvrant une première unité d'éclairage (13a) du véhicule (30) et la deuxième partie d'image (12b) couvrant une deuxième unité d'éclairage (13b) du véhicule (30) ;
la caméra (32) étant prévue pour délivrer une deuxième image (2) de la situation de trafic (20) dans l'environnement, la deuxième image (2) étant délivrée consécutivement à la délivrance de la première image (1) ;
l'unité de traitement (33) étant prévue pour détecter une deuxième section d'image (4) à l'intérieur de la deuxième image (2), la deuxième section (4) couvrant le véhicule (30) dans la deuxième image (2) et
pour définir une première partie d'image (12a) et une deuxième partie d'image (12b) à l'intérieur de la deuxième section (4) ;
la première partie d'image (12a) couvrant la première unité d'éclairage (13a) du véhicule (30) et la deuxième partie d'image (12b) couvrant la deuxième unité d'éclairage (13b) du véhicule (30) ;
l'unité de traitement (33) étant prévue pour diviser les premières parties d'image (12a) et les deuxièmes parties d'image (12b) en une pluralité de sous-zones (16) ; quelques sous-zones de la pluralité (16) à l'intérieur de chaque première partie d'image (12a) couvrant la première unité d'éclairage (13a) et quelques sous-zones de la pluralité (16) à l'intérieur de chaque deuxième partie d'image (12b) couvrant la deuxième unité d'éclairage (13b);
l'unité de traitement (33) étant prévue pour déterminer une variation d'une intensité lumineuse de la première unité d'éclairage (13a) et de la deuxième unité d'éclairage (13b) sur la base des parties d'image (12a, 12b) définies ;
l'unité de traitement (33) étant prévue pour déterminer la variation d'intensité lumineuse de la première unité d'éclairage (13a) et de la deuxième unité d'éclairage (13b) sur la base d'une comparaison entre la première image (1) et la deuxième image (2),
l'unité de traitement (33) étant prévue pour identifier une application de freinage sur la base de la variation d'intensité lumineuse déterminée ; et
l'unité de traitement (33) étant prévue pour vérifier l'application de freinage du véhicule (30) au moyen d'informations de symétrie des premières parties d'image (12a) et des deuxièmes parties d'image (12b) ;
l'unité de traitement (33) étant prévue pour calculer une intensité lumineuse moyenne dans chacune des sous-zones (16) de manière à contrôler l'application de freinage du véhicule (30) sur la base d'une variation symétrique de l'intensité lumineuse moyenne de chacune des sous-zones (16).
